# EUROPÄISCHE PATENTSCHRIFT

(11) **EP 1 389 420 B1**
(45) Veröffentlichungstag und Bekanntmachung des Hinweises auf die Patenterteilung: **21.06.2006**
(21) Anmeldenummer: 02018332.3
(22) Anmeldetag: 13.08.2002
(51) Int. Cl.: A01K 1/00, F24F 13/068, F24F 7/10, F24F 13/06

(54) **Raumbelüftungsinstallation, insbesondere zur Stallbelüftung**
Ventilation system, in particular for ventilating animal houses
Système de ventilation, en particulier pour la ventilation des étables

(43) Veröffentlichungstag der Anmeldung: 18.02.2004
(73) Patentinhaber: Schönhammer, Johann, 84152 Mengkofen (DE)
(72) Erfinder: Schönhammer, Johann, 84152 Mengkofen (DE)
(74) Vertreter: Appelt, Christian W.

(56) Entgegenhaltungen:
- AT-B- 388 437
- DE-A- 1 959 489
- DE-B- 1 248 264
- [Online] Google: "Lüftungsdecke" und "Stall", RETRIEVED ON: 07012005
- EGGERSGLÜSS ET AL: 'Stallklima III', RKL, DEUTSCHLAND * Seite 869 - Seite 889 *
- [Online] Gefunden im Internet: <URL:http:/www.landwirt.com/article/article print/1184/-1/148/> [gefunden am 2004-12-10]
- [Online] Gefunden im Internet: <URL:http://www.lueftungsbau.ch/Klima/lueft ungsdecke> [gefunden am 2004-12-10]
- REVENTA: 'Zulufttrapezschlittplatte mit Dämmauflage', DLG, DEUTSCHLAND
- 'Reventa Katalog 2004', REVENTA, DEUTSCHLAND

## Beschreibung

Die Erfindung bezieht sich auf eine Raumbelüftungsinstallation einer Lüttungsdecke zur Raumbelüftung, insbesondere Stallbelüftung, durch Erzeugung einer Druckdifferenz an der Lüftungsdecke, mit über zumindest einen Teil der Lüftungsdecke verteilte Zuluftöffnungen. Die Lüftung mit solchen Lüftungsdecken-Installationen soll Lüftungen mit erheblich unterschiedlicher Luftleistung ermöglichen und in jedem Fall keinen Luftzug verursachen.

Zur Stallbelüftung sind einerseits Lüftungselemente bekannt, die zumeist ein Rückschlagventil enthalten und insbesondere bei stärkerer Lüftung einen deutlichen Zuluftstrahl erzeugen, und sind andererseits Lüftungsdecken bekannt, die mit sogenannter Verdrängungslüftung arbeiten, aber über keine Rückluftsperre verfügen; bei entsprechender Bauweise wird die Lüftung mit der Lüftungsdecke auch als Porenlüftung bezeichnet. Hierbei wird die Frischluft dem Stall großflächig und mit geringer Strömungsgeschwindigkeit über eine luftdurchlässige Decke zugeführt. Ein Lüftungselement mit Rückschlagfunktion ist z. B. in der AT-B 388437 beschrieben, und Erläuterungen zu beiden Systemen finden sich in RKL Rationalisierungskuratorium für Landwirtschaft, "Stallklima III", Kiel, Okt. 1988.

Einen Überblick über die Raumbelüftungsinstallationen für Ställe und insbesondere über die Porenlüftung gibt weiterhin der Artikel von Hausleitner "Keine Scheu vor Porenlüftung", BLW 26/29.6.2002, S. 35, 36. Die Porenlüftungs-Decke besteht aus einer ersten Schicht, die beispielsweise aus Glaswolle oder Steinwolle besteht und als Strömungsbremse wirkt, und einer darunterliegenden zweiten Schicht, die der Luftverteilung dient. Problem bei solchen Porenschichten ist indessen deren Neigung, sich mit Staub zuzusetzen, der angesichts des Wechsels zwischen Nässe und Trockenheit in der Lüftungsdecke zunehmend verkrustet und die Durchlässigkeit der Decke beeinträchtigt.

Es sind auch Lochplattendecken bekannt, bzw. gemäß DE 198 22 806 A Doppellochplatten. Diese Lochplatten sind jedoch nahezu strömungswiderstandslos luftdurchlässig und durch sie, obwohl sie als Zuluftinstallation gedacht sind, entweicht Luft aus dem Raum, wenn man nicht eine ausreichende Druckdifferenz erzeugt, also einen Überdruck über der Lochplattendecke und/oder einen Unterdruck im Raum. Das Entweichen der Raumluft über die Zuluftkanäle macht sich besonders dann nachteilig bemerkbar, wenn man einen zunächst kalten Stall neu aufheizen will. Die warme Luft steigt auf und entweicht. Wird indessen die Lüftung in Gang gesetzt, so entweicht die neu angewärmte Luft über den Abluftkamin. Die Lochplatten bereiten auch im laufenden Betrieb Probleme hinsichtlich der Luftströmung aufgrund ihres geringen Strömungswiderstands. Hierbei ist zu bedenken, daß der normale Betriebs-Luftdurchsatz sehr unterschiedlich sein kann, beispielsweise im Winter 5 und im Sommer mindestens 100 m³/m² **•** h, im allgemeinen eher 200 bis 250 m³/m² **•** h.

Durch die Erfindung sollen die Strömungsverhältnisse der Raumbelüftungsinstallation verbessert werden und eine größere Unempfindlichkeit der Steuerung bewirkt werden. Dies wird gemäß der Erfindung gemäß den Hauptanspruch dadurch erreicht, daß die Raumbelüftungsinstallation wenigstens ein Rückschlagventil, das eine Luftströmung über die Zuluftöffnungen in den Raum zuläßt und eine Luftströmung über die Zuluftöffnungen aus dem Raum heraus sperrt, umfaßt. Ein solches Rückschlagventil verhindert das Entweichen der Raumluft über die Zuluftkanäle und ist so dimensionierbar, daß beim Betriebs-Luftdurchsatz auf Grund einer vom Luftdurchsatz abhängigen Öffnungsweite eine gewisse Strömungsbremsung erfolgt, die einen zugfreien angemessenen Luftdurchsatz zur Folge hat.

Ventile in Raumbelüftungsinstallationen sind an sich bekannt. Beispielsweise beschreibt die DE-20 13 244 B eine Luftinstallation mit Klappen (12), die gesteuert Luftaustrittsspalte (11) öffnen oder schließen können; und die DE-35 21 700 C beschreibt eine Lüftungsdecke, bei der es außer Flächenluftverteilern (5) noch punktförmige Luftverteiler (8) gibt, die durch einen Schieber (10) mit Hilfe eines Stellmotors (12) geöffnet oder geschlossen werden können. An Abluftabsaugböden sind durch die DE-37 38 444 A Strömungsleitflächen (11) bekannt, die der abziehenden Abluft eine Richtung verleihen sollen. Durch diese bekannten Maßnahmen werden indessen keine Lüftungsdecken mit Rückschlagventil nahegelegt.

Die Rückschlagventile sind bei Porenlüftungsdecken und bei Lochplatten-Lüftungsdecken mit Vorteil anwendbar, ihre Vorzüge erweisen sich jedoch in verstärktem Maße bei den Lochplatten-Lüftungsdecken, deren Zuluftöffnungen im Vergleich zu den Poren wesentlich größer sind. Die Zuluftöffnungen brauchen naturgemäß nicht kreisförmig zu sein, sondern können auch aus länglichen Schlitzen oder sonstigen Strukturen bestehen.

An Lochplatten-Lüftungsdecken besteht eine bevorzugte Konstruktion darin, daß das wenigstens eine Rückschlagsventil aus einer Rückschlagklappe besteht, die von der Raumseite her federnd an wenigstens einem Teil der Zuluftöffnungen anliegt, die durch wenigstens eine Lage der Lüftungsdecke verlaufen. Insbesondere sind an der betreffenden Lage der Lüftungsdecke mehrere Rückschlagklappen montiert, die ohne anliegenden Druckunterschied die Lüftungsöffnungen geschlossen halten, jedoch bei Anlegen einer Druckdifferenz einen Spalt öffnen, beispielsweise bei kleiner Lüftungsleistung einen Spalt von 0,1 mm und bei großer Lüftungsleistung einen Spalt von 2 mm. Durch entsprechende Wahl der Federkraft der Lüftungsklappen kann eine passende Dimensionierung des Durchströmwiderstands geschaffen werden, der bei dieser Art in wesentlich geringerem Maße überlinear von der Strömungsgeschwindigkeit und damit von der Lüftungsleistung abhängig ist als im Fall einer Porenlüftung mit Glas- oder Steinwolle, wo er dem Quadrat der Durchströmgeschwindigkeit proportional ist.

Bevorzugte Bauformen bestehen darin, daß die Rückschlagklappe eine Vorspannung zur Schaffung einer Zylindersegmentform hat, oder daß die Rückschlagklappe an ihrem freien Rand einen Wulst aufweist. Hierdurch wird verhindert, daß die Rückschlagklappen, wenn sie aus einer halbsteifen Folie bestehen, mangels Vorspannung durch ihr Gewicht ein Stück weit herunterhängen und damit die Öffnungen auch ohne Druckdifferenz freigeben; und außerdem, daß die Rückschlagklappen an der Unterseite der Deckenlage beispielsweise bei Feuchtigkeit anhaften. Die Konstruktion schafft-auch bei geschlossenen Rückschlagklappen über diesen einen kleinen Luftraum, der mit der jeweiligen Zuluftöffnung kommuniziert, so daß die Druckdifferenz, auch wenn sie sehr klein ist, auf eine Fläche der Rückschlagklappe wirkt, die die Größe der Zuluftöffnung übertrifft.

Als Alternative zur Rückschlagklappe, die sich an die Deckenlage anlegt, kommt beispielsweise auch die Konstruktion zweier mit umgebogenen Randstreifen gegeneinander liegender federnder Folieblätter in Frage. Dem Fachmann sind noch weitere Möglichkeiten zur Erzielung der Strömungsventilfunktion bekannt.

Die Lüftungsdecke mit den Rückschlagsventilen kann in kostengünstiger Weise in Form von Deckenmoduln vorgefertigt sein, die beispielsweise als Deckenplatten mit 1,20 m • 2,50 m ausgebildet sind und eine Lage umfassen, die in sich eine ausreichende Tragfestigkeit aufweist, die Zuluftöffnungen enthält und die Rückschlagklappen trägt. Die Platte kann in an sich bekannter Weise aus kunststoffbeschichteter Schaumplatte, einer Hohlkammerlochplatte oder in noch formstabilerer und langlebigerer Ausführung aus glasfaserverstärktem Kunststoff bestehen. Es ist jedoch auch möglich, daß die betreffende Deckenplatte, in der sich die Zuluftöffnungen befinden, aus einem dünneren, aber ausreichend steifen Folienmaterial besteht und als Meterware hergestellt wird, indem das Folienmaterial von einer Rolle abgewickelt, mit den Öffnungen versehen und mit den streifenförmigen Rückschlagklappen verklebt wird.

Weitere Vorteile, Einzelheiten und Weiterbildungen der Erfindung ergeben sich aus der folgenden Beschreibung bevorzugter Ausführungsbeispiele unter Bezugnahme auf die Zeichnung. Es zeigen:
- Fig. 1: eine geschnittene perspektivische Darstellung von shräg unten eines Abschnitts einer Lüftungsdecke, die Teil einer Raumbelüftungsinstallation ist;
- Fig. 2: einen Querschnitt durch eine im Vergleich zu Fig. 1 geringfügig abgewandelte Lüftungsdecke, im Vergleich zu Fig. 1 mit um 90° gedrehter Blickrichtung;
- Fig. 3: einen Schnitt durch eine abgewandelte Ausführungsform;
- Fig.n 4, 5 und 6: Querschnitte durch weiterhin abgewandelte Ausführungsformen, jeweils unter Darstellung einer Rückschlagklappe sowohl vor als auch nach ihrer Montage;
- Fig.n 7 bis 11: Querschnitte durch weiterhin abgewandelte Ausführungsformen;
- Fig. 12: in perspektivischer Darstellung eine Lüftungsbahn als "Meterware".

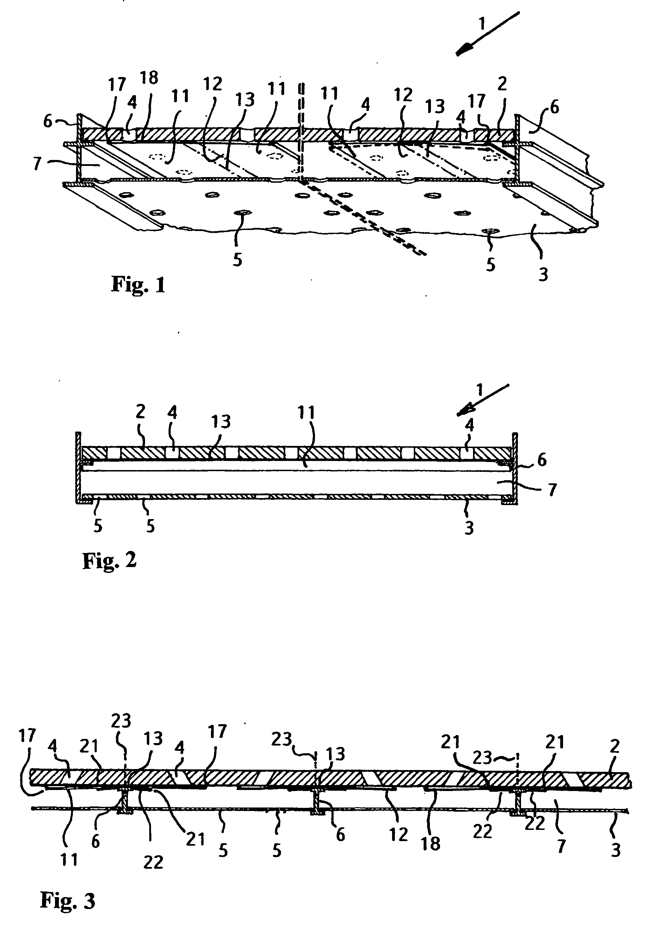

Fig. 1 zeigt ein Deckenmodul 1 einer Lüftungsdecke, die in der aus der DE-198 22 806 A bekannten Weise als Stalldecke in eine Raumbelüftungsinstallation einbezogen ist. Das Deckenmodul 1 umfaßt eine etwas dickere obere Lochplatte 2 und eine etwas dünnere untere Lochplatte 3, mit jeweiligen Lüftungsöffnungen 4 bzw. 5. Die Lochplatten 2 und 3 werden von seitlichen Profilträgern 6 getragen, die ihrerseits aufgehängt oder an ihren Enden in Mauern verankert sind.

Die beiden Lochplatten 2 und 3 stellen Lagen der Lüftungsdecke dar. Zwischen ihnen befindet sich in bekannter Weise eine Ausgleichskammer 7, die eine Beruhigung der Luftströmung durchführt und im unterhalb der Lüftungsdecke befindlichen Raum, insbesondere Stall, eine weitgehend zugfreie Lüftung bewirkt.

An der Unterseite der oberen Lochplatte 2 sind Rückschlagklappen 11 montiert, die die Lüftungsöffnungen 4 im Ruhezustand abdecken und bei Anlegen einer Druckdifferenz an die Lüftungsdecke von den Lüftungsöffnungen 4 abheben. In Fig. 1 ist der abgehobene Zustand in der rechten Bildhälfte gestrichelt eingezeichnet. Jeweils zwei Rücken an Rücken liegende Rückschlagklappen 11 bestehen aus einem gemeinsamen, doppelt breiten Membranestreifen 12, der entlang einem Längsmittelstreifen 13 an der oberen Lochplatte 2 zwischen zwei Reihen der Lüftungsöffnungen 4 befestigt ist. In der Darstellung von Fig. 1 sind die Membranestreifen 12 angeklebt, in Fällen, in denen diese Streifen zum Zweck der in Intervallen erforderlichen Reinigung abmontiert werden sollen, können sie beispielsweise auch angeschraubt sein. Die Membranestreifen 12 bestehen aus elastisch federnder flexibler, eine gewisse Steifigkeit aufweisender Folie, beispielsweise aus PVC oder Polyester, für eine höherwertige Ausbildung kommt auch Edelstahl in Frage, beispielsweise mit einer Stärke von 50 µm.

Durch ausreichend dünne Folien können die Streifen der Rückschlagklappen 11 schmal sein und insofern die Abstände der Lochreihen vom Klebe-Längsmittelstreifen 13 bzw. von der nächsten Lochreihe gering gehalten werden.

Beim beschriebenen Beispiel von Fig. 1 wird die Rückstell-Federkraft der Rückschlagklappen 11 durch das Biegemoment des Materials der Klappen aufgebracht. Diese Rückschlagklappen weisen eine Biegesteife auf, die vorzugsweise vom Fachmann experimentell bestimmt wird. Bei einer kleinen Druckdifferenz von beispielsweise 5 Pa soll ein sehr schmaler Spalt gebildet und ein gebremster Luftdurchsatz von beispielsweise 5 m³/m² **•** h bewirkt werden, und bei einer Druckdifferenz von beispielsweise 10 Pa soll ein Spalt von z. B. 2 mm erzeugt und ein Durchsatz von 100 m³/m² • h erzielt werden. Diese Zahlenangaben sind nur beispielhaft und können im Einzelfall anders sein, mit der Folge, daß eine andere Materialstärke oder andere Längendimensionierungen für die Rückschlagklappen 11 gewählt werden.

Die freien Enden der Rückschlagklappen 11, also die Längsränder der Membranstreifen 12, sind mit Gummierungsstreifen 17 versehen, die eine einigermaßen dichte Anlage an der glatten Wand der Lochplatte 2 sicherstellen. Die Gummierungsstreifen 17 bilden endseitige Wulste, die die gemäß Fig. 1 vom Längsmittelstreifen 13 zunächst plattenparallel ausgehenden Rückschlagklappen 11 leicht nach unten biegen und hierdurch mehrere Funktionen erfüllen: Sie bewirken eine permanente Vorspannung der Rückschlagklappen 11 nach oben und damit eine ständige Anlage und gute Abdichtung zwischen den Streifen 17 und der Lochplatte 2, und bewirken außerdem eine schmale Luftkammer 18 zwischen der Lochplatte 2 und der Rückschlagklappe 11 mit der Folge, daß die von oben angesaugte Zuluft auch schon zu Beginn der Ansaugung die Kammer 18 füllt und die Druckdifferenz auf die gesamte Fläche der Klappe 18 wirkt.

Fig. 2 zeigt eine Schnittdarstellung durch eine Lüftungsdecke in einer gegenüber Fig. 1 um 90° verdrehten Blickrichtung. Die Lüftungsdecke hat gegenüber derjenigen von Fig. 1 den Unterschied, daß die seitlichen Profilträger 6 im Vergleich zu denen von Fig. 1 an den anderen um 90° verdrehten Rändern des Deckenmoduls 1 sitzen und sich die Rückschlagklappen 11, die in Fig. 2 zur klareren Darstellung in leicht geöffneter Stellung eingezeichnet sind, über die gesamte Breite des Deckenmoduls 1 vom Profilträger 6 der einen Seite bis zum Profilträger 6 der anderen Seite erstrecken. Mit ihren seitlichen Rändern liegen sie an entsprechenden Flächen der Profilträger 6 mit einem minimalen Spalt an, der dazu ausreicht, daß nicht eine auftretende Reibungskraft die Verstellung der Rückschlagklappe 11 hemmt. Durch diese Anordnung sind die Luftkammern 18 seitlich durch die Profilträger 6 weitgehend abgeschlossen.

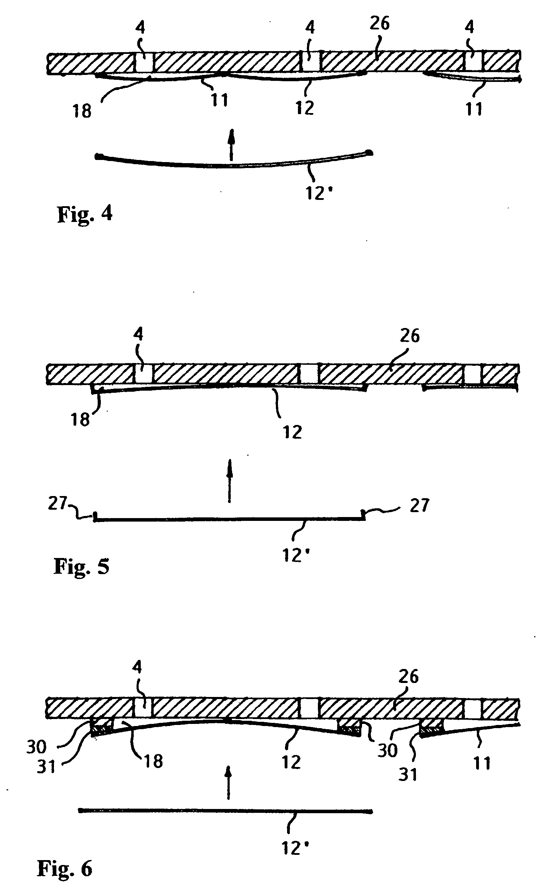

Die Lüftungsdecke von Fig. 3 ist gegenüber den Decken von Fig.n 1 und 2 in mehrfacher Hinsicht abgewandelt.

Zunächst sind die Lüftungsöffnungen 4 in der oberen Lochplatte 2 schräg orientiert. Hierdurch erhält die Luftströmung in der Ausgleichskammer 7 eine stärkere horizontale Komponente und verhindert, daß sich in den windstillen Ecken Staubansammlungen bilden.

Ein weiterer Unterschied besteht in der Ausbildung der Rückschlagklappen 11. Diese bestehen aus starren Streifen, die um Scharnierlinien 21 verdrehbar sind. Die Scharnierlinien 21, die beispielsweise Kerblinien in dem relativ starren Blattmaterial sein können, verlaufen entlang den oberen Kanten der Profilträger 6, die im Vergleich zu den Profilträgern 6 der Fig.n 1 und 2 ein anderes Profil aufweisen. Die Federkraft wird erzeugt mit Hilfe von Federzungen 22, die zwischen den Profilträgern 6 und der Lochplatte 2 eingespannt sind und von unten auf die Rückschlagklappen 11 drücken. Die Federzungen 22 können in Abständen angeordnete Streifen sein, an ihrer Stelle kann aber auch eine durchgehende Federplatte in geringem Abstand von der Scharnierlinie 21 auf die jeweilige Rückschlagklappe 11 drücken.

Die Lochplatte 2 verläuft bei der Ausführung nach Fig. 3 nicht nur jeweils zwischen den Profilträgern 6, sondern liegt auf diesen auf und besteht aus größeren Flächenstücken, die beispielsweise in Abständen an die Profilträger 6 angeschraubt sind, wie in der Figur bei 23 angedeutet ist.

Die freien Ränder der Rückschlagplatten 11 sind auch hier mit den Gummierungsstreifen 17 versehen.

Fig. 4 zeigt im Schnitt eine einzelne Lochplatte 26, die eine obere Lochplatte entsprechend der Lochplatte 2 oder eine einzige Lochplatte der Lüftungsdecke sein kann. Von speziellem Interesse ist bei der Ausführung von Fig. 4 die Gestaltung des Membranstreifens 12, der zunächst als 12' vor der Montage, und dann als Membranstreifen 12 nach der Montage dargestellt ist. Als Streifen 12' hat er eine leichte Zylindersegmentform, mit einer Material-Formerinnerung und somit der Tendenz, nach einer Verformung in diese Form zurückzukehren. Nach der Befestigung am Längsmittelstreifen 13 hat der Membranstreifen 12 beiderseits eine bogenförmige Querschnittsform, die bewirkt, daß die freien äußeren Kanten des Membranstreifens 12 bzw. der beiden Rückschlagklappen 11 an die Lochplatte 26 angedrückt werden.

Fig. 5 zeigt in gleicher Weise wie Fig. 4 die einzelne Lochplatte 26 und den noch unmontierten Membranstreifen 12' sowie den etwas später fertig montierten Membranstreifen 12. Bei diesem Membranstreifen sind die Ränder nach oben geknickt und bilden randseitige Längsflansche 27 konstanter Höhe, die sich bei montiertem Streifen an die Lochplatte 26 anlegen und die gleiche Funktion ausüben wie die Ränder der Membranstreifen 12 von Fig. 4.

Auch in Fig. 6 ist die Lochplatte 26 sowohl mit dem noch nicht montierten Membranstreifen 12' als auch mit dem montierten Membranstreifen 12 dargestellt. Der Membranstreifen 12' hat hier keinerlei von der Ebene abweichende Vor-Formgebung, und die Maßnahmen zur dichten Anlage an der Platte 26 sind an letzterer getroffen. An der Lochplatte 26 sind parallel zum Längsmittelstreifen 13 des montierten Membranstreifens 12 in passendem Abstand nach unten vorspringende Leisten 30 befestigt, die an ihrer unteren Stirnfläche jeweils einen Gummistreifen 31 tragen. An diesem Gummistreifen 31 legen sich die Randbereiche der federnden Rückschlagklappen 11 bzw des Membranstreifens 12 an, die bzw. der durch diese Auslenkung eine ausreichende Rückstellkraft aufweist, die ihn an den jeweiligen Gummistreifen 31 andrückt und hierdurch eine ausreichende Abdichtung schafft, solange nicht die Druckdifferenz die Rückstellklappen 11 von den Gummistreifen 31 wegdrückt.

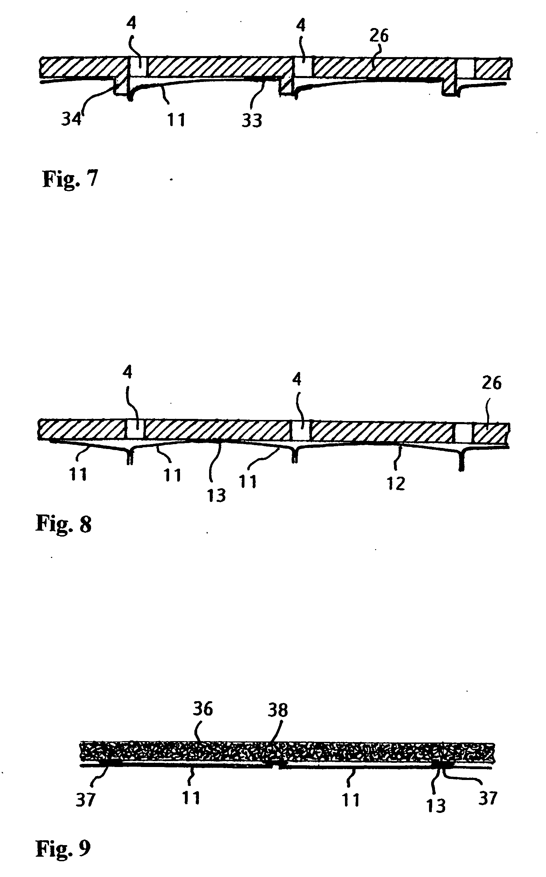

Fig. 7 zeigt einseitig bei 33 befestigte Rückschlagklappen 11, die federnd an Vorsprüngen 34 der Lochplatte 26 anliegen, und Fig. 8 zeigt wiederum an ihren Längsmittelstreifen 13 befestigte Membranstreifen 12, die in der in der Zeichnung dargestellten Weise mit ihren Randstreifen federnd an den Randstreifen der benachbarten Membranstreifen 12 anliegen und hierdurch die Ventilwirkung erzielen.

Gemäß Fig. 9 sind die Rückschlagklappen an einer Porenlüftungsplatte 36 montiert. Diese hat bei der dargestellten Ausführungsform an ihrer Unterseite angeklebte Streifen 37, an denen wiederum die Längsmittelstreifen 13 der Membranstreifen 12 befestigt sind, und als Ventilsitz dienende, zu den Streifen 37 parallel verlaufende weitere Streifen 38, an die sich die freien Ränder der Membranstreifen 12, gegebenenfalls über ihre Gummierungsstreifen 17, anlegen.

Die verschiedenen Ausführungsformen der Rückschlagventile veranschaulichen die breite Realisierungsmöglichkeit der erfinderischen Idee.

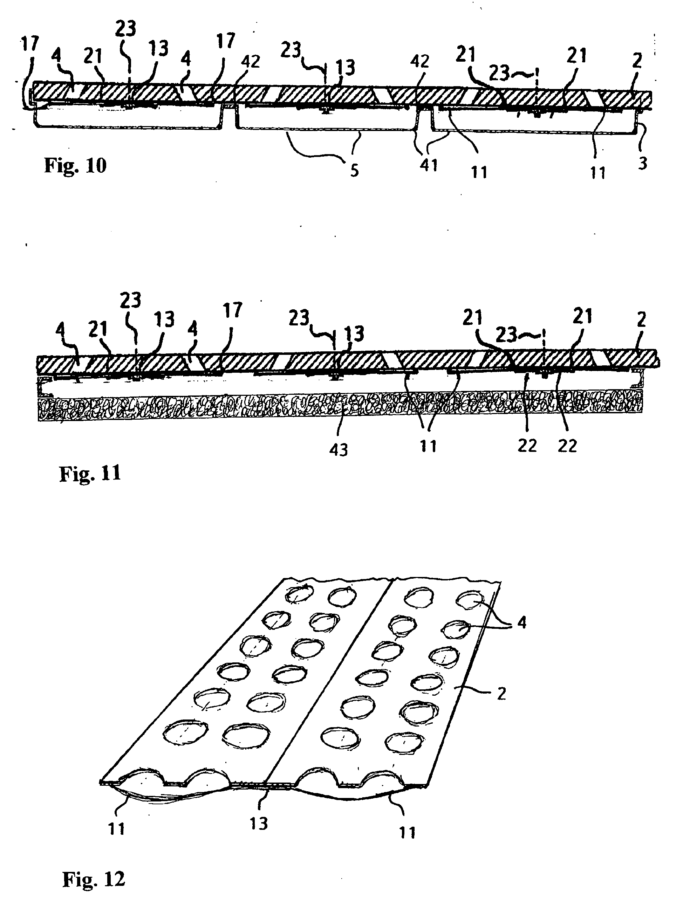

Fig. 10 zeigt eine Lüftungsdecke ähnlich der von Fig. 3, jedoch mit einer unteren Lochplatte 3 in Form eines Formteils wie z. B. einer gelochten Tiefziehplatte, die an streifen- oder noppenförmigen Basisstellen 42 mit der oberen Lochplatte 2 verklebt ist. Gemäß Fig. 11 ist die obere Lochplatte 2, die die Rückschlagklappen 11 trägt, mit einer unteren Porenplatte 43 kombiniert.

Fig. 12 veranschaulicht die Lüftungsdecke mit einem Grundmaterial für die Platte 2 aus einer steifen Folie, die von einer Rolle abgewickelt wird, und mit an der Unterseite der Folie am Streifen 13 angeklebtem, von einer anderen Rolle abgewickeltem Rückschlagklappenmaterial 11.

## Patentansprüche

1. Raumbelüftungsinstallation einer Lüftungsdecke zur Raumbelüftung, insbesondere Stallbelüftung, durch Erzeugung einer Druckdifferenz an der Lüftungsdecke, mit über zumindest einen Teil der Lüftungsdecke verteilten Zuluftöffnungen (4), **dadurch gekennzeichnet, daß** die Raumbelüftungsinstallation wenigstens ein Rückschlagventil (11, 12), das eine Luftströmung über die Zuluftöffnungen (4) in den Raum zuläßt und eine Luftströmung über die Zuluftöffnungen (4) aus dem Raum heraus sperrt, umfaßt.

2. Raumbelüftungsinstallation nach Anspruch 1, **dadurch gekennzeichnet, daß** das wenigstens eine Rückschlagsventil aus einer Rückschlagklappe (11) besteht, die von der Raumseite her federnd an wenigstens einem Teil der Zuluftöffnungen (4) anliegt, die durch wenigstens eine Lage (2, 26) der Lüftungsdecke verlaufen.

3. Raumbelüftungsinstallation nach Anspruch 2, **dadurch gekennzeichnet, daß** die wenigstens eine Rückschlagklappe (11) eine innere Vorspannung zur Schaffung einer Zylindersegmentform hat.

4. Raumbelüftungsinstallation nach Anspruch 2, **dadurch gekennzeichnet, daß** die wenigstens eine Rückschlagklappe (11) an ihrem freien Rand einen Wulst (17) aufweist.

5. Raumbelüftungsinstallation nach einen der Ansprüche 2 bis 4, **dadurch gekennzeichnet, daß** die wenigstens eine Rückschlagklappe (11) an der Unterseite der oberen Platte (2) einer Doppel-Lochplatte (1) sitzt, deren einzelne Lochplatten (2, 3) Lagen der Lüftungsdecke sind und zwischen sich eine Zwischenkammer (7) einschließen.

6. Raumbelüftungsinstallation nach einem der Ansprüche 2 bis 5, **dadurch gekennzeichnet, daß** die wenigstens eine Rückschlagklappe (11) ein Blatt aus einer elastisch federnden flexiblen, aber eine gewisse Steifigkeit aufweisenden Folie ist, das an der Unterseite einer die betreffenden Zuluftöffnungen (4) aufweisenden Deckenplatte (2, 26) sitzt, an dieser entlang einer einen Abstand von den jeweiligen Zuluftöffnungen aufweisenden Biegescharnierlinie (13) befestigt ist und mit von der Biegescharnierlinie seitwärts abstehenden federnden Streifen (11) in einem Bereich gegen die Deckenplatte gedrückt ist, in dem sich die Zuluftöffnungen befinden.

7. Raumbelüftungsinstallation nach Anspruch 1, **dadurch gekennzeichnet, daß** das wenigstens eine Rückschlagventil aus zwei Rückschlagklappen (11) besteht, die jeweils aus einem Blatt (12) aus einer elastisch federnden flexiblen, aber eine gewisse Steifigkeit aufweisenden Folie bestehen, an der Unterseite einer die betreffenden Zuluftöffnungen aufweisenden Deckenplatte (26) sitzen, an dieser entlang von jeweiligen, im Abstand von den jeweiligen Zuluftöffnungen (4) in Bezug auf diese gegenüberliegend angeordneten Linien (13) befestigt sind und mit ihren gegeneinander gerichteten Randstreifen unterhalb eines Bereichs der Deckenplatte, in dem sich die Zuluftöffnungen befinden, unter leichter Flächenpressung aneinanderlegen (Fig. 8).

8. Raumbelüftungsinstallation nach einem der Ansprüche 2 bis 7, **dadurch gekennzeichnet, daß** die Rückschlagklappe (11, 12) aus einem abwaschbaren Material besteht.

9. Raumbelüftungsinstallation nach Anspruch 5 oder 7 oder nach dem auf Anspruch 5 oder 7 rückbezogenen Anspruch 8, **dadurch gekennzeichnet, daß** die Lüftungsdecke aus einzelnen in der Einbaulage horizontalen rechteckigen Deckenmoduln (1) besteht, die jeweils die die Zuluftöffnungen (4) mit der Rückschlagklappe (11) enthaltende obere Deckenlage (2) und eine hierzu parallele tieferliegende, ebenfalls mit Zuluftöffnungen (5) versehene untere Deckenlage (3) sowie an wenigstens zwei gegenüberliegenden Seitenkanten die Deckenlagen miteinander verbindende vertikale Stege (6) umfassen, und daß die Rückstellklappen (11) quer über die Unterseite der oberen Deckenlage (2) von Steg zu Steg verlaufen und am Steg jeweils auf- und abbewegbar anliegen (Fig. 2).

10. Raumbelüftungsinstallation nach Anspruch 9, **dadurch gekennzeichnet, daß** die untere Deckenlage (3) eine Tiefziehplatte (41) ist, mit Basisvorsprüngen (42) als vertikale Stege, die an der oberen Lochplatte (2) angeklebt sind.

## Claims

1. Room ventilation installation of a ventilation ceiling for room ventilation, in particular for the ventilation of stables, by a pressure difference being generated at the ventilation ceiling, with supply-air ports (4) distributed over at least part of the ventilation ceiling, **characterized in that** the room ventilation installation comprises at least one non-return valve (11, 12) which permits an air flow via the supply-air ports (4) into the room and shuts off an air flow via the supply-air ports (4) out of the room.

2. Room ventilation installation according to Claim 1, **characterized in that** the at least one non-return valve consists of a non-return flap (11) which bears resiliently from the room side against at least some of the supply-air ports (4) which run through at least one ply (2, 26) of the ventilation ceiling.

3. Room ventilation installation according to Claim 2, **characterized in that** the at least one non-return flap (11) has an internal prestress for creating a shape in the form of a segment of a cylinder.

4. Room ventilation installation according to Claim 2, **characterized in that** the at least one non-return flap (11) has a bead (17) at its free edge.

5. Room ventilation installation according to one of Claims 2 to 4, **characterized in that** the at least one non-return flap (11) is seated on the underside of the upper board (2) of a double apertured board (1), the individual apertured boards (2, 3) of which are plies of the ventilation ceiling and between them enclose an intermediate chamber (7).

6. Room ventilation installation according to one of Claims 2 to 5, **characterized in that** the at least one non-return flap (11) is a sheet which consists of an elastically resilient film, flexible, but having some rigidity, which is seated on the underside of a ceiling board (2, 26) having the respective supply-air ports (4), is fastened to the said ceiling board along a bending hinge line (13) lying at a distance from the respective supply-air ports and is pressed, with a resilient strip (11) projecting laterally from the bending hinge line, against the ceiling board in a region in which the supply-air ports are located.

7. Room ventilation installation according to Claim 1, **characterized in that** the at least one non-return valve consists of two non-return flaps (11) which consist in each case of a sheet (12) consisting of an elastically resilient film, flexible, but having some rigidity, are seated on the underside of a ceiling board (26) having the respective supply-air ports, are fastened to the said ceiling board along respective lines (13) arranged at a distance from the respective supply-air ports (4) and opposite these, and, with their edge strips directed towards one another, come to bear one against the other, under slight surface pressure, below a region of the ceiling board in which the supply-air ports are located (Fig. 8).

8. Room ventilation installation according to one of Claims 2 to 7, **characterized in that** the non-return flap (11, 12) consists of a washable material.

9. Room ventilation installation according to Claim 5 or 7 or according to Claim 8 referring back to Claim 5 or 7 **characterized in that** the ventilation ceiling consists of individual rectangular ceiling modules (1), horizontal in the installation position, which comprise in each case the upper ceiling ply (2), containing the supply-air ports (4) with the non-return flap (11), and a lower-lying lower ceiling ply (3) parallel to the said upper ceiling ply and likewise provided with supply-air ports (5), and also vertical webs (6) connecting the ceiling plies to one another at at least two side edges lying opposite one another, and **in that** the non-return flaps (11) run transversely over the underside of the upper ceiling ply (2) from web to web and bear against the web in each case so as to be capable of being moved up and down (Fig. 2).

10. Room ventilation installation according to Claim 9, **characterized in that** the lower ceiling ply (3) is a deep-drawn board (41), with base projections (42) as vertical webs which are glued to the upper apertured board (2).

## Revendications

1. Système de ventilation de locaux d'un plafond de ventilation pour la ventilation de locaux, en particulier, ventilation d'étables, par production d'une différence de pression au plafond de ventilation, avec des ouvertures d'admission d'air (4) réparties sur au moins une partie du plafond de ventilation, **caractérisé en ce que** le système de ventilation de locaux comprend au moins une soupape anti-retour (11, 12), permettant un écoulement d'air par les ouvertures d'admission (4) vers l'intérieur du local et bloquant un écoulement d'air par les ouvertures d'amenée d'air (4) vers l'extérieur du local.

2. Système de ventilation de locaux selon la revendication 1, **caractérisé en ce que** la au moins une soupape anti-retour est formée d'un clapet anti-retour (11) appuyant, depuis le côté local, élastiquement sur au moins une partie des ouvertures d'amenée d'air (4) s'étendant à travers au moins une couche (2, 26) du plafond de ventilation.

3. Système de ventilation de locaux selon la revendication 2, **caractérisé en ce que** le au moins une anti-retour (11) présente une précontrainte intérieure pour créer une forme en segment de cylindre.

4. Système de ventilation de locaux selon la revendication 2, **caractérisé en ce que** la au moins une soupape anti-retour (11) présente un bourrelet (17) sur son bord libre.

5. Système de ventilation de locaux selon l'une des revendications 2 à 4, **caractérisé en ce que** le au moins un clapet anti-retour (11) est placé sur la face inférieure de la plaque supérieure (2) d'une plaque perforée double (1), dont les différentes plaques perforées (2, 3) sont des couches du plafond de ventilation et enclosent entre elles une chambre intermédiaire (7).

6. Système de ventilation de locaux selon l'une des revendications 2 à 5, **caractérisé en ce que** la au moins une soupape anti-retour (11) est une lame d'une feuille flexible, déformable élastiquement, mais présentant une certaine rigidité et placée sur la face inférieure d'une plaque de plafond (2, 26) présentant les ouvertures d'amenée d'air (4) concernées, en étant fixée sur celle-ci, le long d'une ligne de charnière à flexion (13), présentant un espacement par rapport aux ouvertures d'amenée d'air respectives, et pressée avec des bandes (11) déformables élastiquement, en saillie latéralement de la ligne de charnière à flexion, contre la plaque de plafond, dans une zone dans laquelle se trouvent les ouvertures d'amenée d'air.

7. Système de ventilation de locaux selon la revendication 1, **caractérisé en ce que** la au moins une soupape anti-retour est formée de deux clapets anti-retour (11), composés chacun d'une lame (12) d'une feuille flexible, déformable élastiquement, mais présentant une certaine rigidité, montés en face inférieure d'une plaque de plafond (26) présentant les ouvertures d'amenée d'air concernées, fixés sur celle-ci, lé long de lignes (13) respectives, disposées à distance des ouvertures d'amenée d'air (4) respectives et en opposition par rapport à celles-ci, et placés en appui les uns sur les autres, sous l'effet d'une légère pression de surface, avec leurs bandes de bordure orientées les unes à l'opposé des autres, au-dessous d'une zone de la plaque de plafond dans laquelle se trouvent les ouvertures d'amenée d'air (Fig. 7).

8. Système de ventilation de locaux selon l'une des revendications 2 à 7, **caractérisé en ce que** le clapet anti-retour (11, 12) est formé d'un matériau lavable.

9. Système de ventilation de locaux selon la revendication 5 ou 7 ou selon la revendication 8 se référant à la revendication 5 ou 7, **caractérisé en ce que** le plafond de ventilation est composé de différents modules de plafond (1) rectangulaires, horizontaux une fois montés, comprenant chacun la couche de plafond supérieur (2), contenant les ouvertures d'amenée d'air (4) avec le clapet anti-retour (11), et une couche de plafond inférieure (3) placée plus bas, parallèle à celle-ci et également munie d'ouvertures d'amenée d'air (5), ainsi que des nervures (6) verticales, reliant entre elles les couches de plafond en au moins deux bords latéraux opposés, et **en ce que** les clapets anti-retour (11) s'étendent d'une nervure à l'autre, transversalement sur la face inférieure de la couche de plafond inférieur (2), et viennent en appui sur la nervure chaque fois d'une façon permettant une levée et une descente (Fig. 2).

10. Système de ventilation de locaux selon la revendication 9 , **caractérisé en ce que** la couche de plafond intérieure (3) est une plaque d'étirage profond (41), comprenant des saillies de base (42), réalisées sous la forme de nervures verticales, rapportées par collage sur la plaque perforée supérieure (2).
